# EUROPEAN PATENT SPECIFICATION

(11) **EP 3 129 138 B1**
(45) Date of publication and mention of the grant of the patent: **01.07.2020**
(21) Application number: 15715239.8
(22) Date of filing: 08.04.2015
(51) Int. Cl.: B01J 29/035

(54) **A GENERAL METHOD TO INCORPORATE METAL NANOPARTICLES IN ZEOLITES AND ZEOTYPES**
ALLGEMEINES VERFAHREN ZUR EINBRINGUNG VON METALLNANOPARTIKELN IN ZEOLITHE UND ZEOTYPE
PROCÉDÉ GÉNÉRAL D'INCORPORATION DE NANOPARTICULES DE MÉTAL DANS DES ZÉOLITES ET DES ZÉOTYPES

(30) Priority: 10.04.2014 EP 14164188
(43) Date of publication of application: 15.02.2017
(73) Proprietor: Danmarks Tekniske Universitet, 2800 Kgs. Lyngby (DK)
(72) Inventor: KEGNÆS, Søren, 21630 Limhamn (SE); MIELBY, Jerrik Jørgen, 2720 Værløse (DK); ABILDSTRØM, Jacob Oskar, 2300 Copenhagen S (DK)
(74) Representative: Zacco Denmark A/S
(86) International application number: PCT/EP2015/057585
(87) International publication number: WO 2015/155216

(56) References cited:
- US-A1- 2005 239 634
- ANDERS&EMSP14;B. LAURSEN ET AL: "Substrate Size-Selective Catalysis with Zeolite-Encapsulated Gold Nanoparticles", ANGEWANDTE CHEMIE INTERNATIONAL EDITION, vol. 49, no. 20, 3 May 2010 (2010-05-03), pages 3504-3507, XP055115150, ISSN: 1433-7851, DOI: 10.1002/anie.200906977
- SHIWEN LI ET AL: "Ultimate size control of encapsulated gold nanoparticles", CHEMICAL COMMUNICATIONS, vol. 49, no. 76, 1 January 2013 (2013-01-01), page 8507, XP055115172, ISSN: 1359-7345, DOI: 10.1039/c3cc44843f

## Description

The invention relates to a method for producing a zeolite, zeolite-like or zeotype structure with selective formation of metal, metal oxide or metal sulphide nanoparticles and/or clusters inside the zeolite, zeolite-like or zeotype structure.

### Background of the invention

In the view of the current environmental challenges there is an urgent need to develop a more sustainable chemical industry through more efficient chemical transformations and by developing new highly selective and cost-effective catalysts. One approach towards enhanced catalytic performance of supported metal catalysts is to increase the active metal surface by synthesizing small metal nanoparticles (often <10 nm in diameter). However, small nanoparticles are often prone to sintering which decreases the catalytic activity over time. The development of sinter-stable heterogeneous nanoparticle catalysts is therefore of great importance, but also poses great challenges.

Zeolites are crystalline alumina silicate materials that exhibit a highly ordered porous structure with pores of molecular diameter. IUPAC identifies this type of porosity as microporous, as the size of the pores is not wider than 2 nm. The other groups of porosity are mesoporous (pore size between 2-50 nm) and macroporous. (pore size larger than 50 nm). Zeolites consist of tetrahedral TO₄ units (T= Si or Al), which gives the framework an overall composition of TO₂. These materials have a clearly organized framework throughout the crystals, giving rise to highly ordered pores and a large internal surface area. By replacing a silicon atom with an aluminium atom, it is possible to generate a deficit of charge, which is compensated by a cation located nearby. The cation is usually an alkali metal (such as sodium), alkali earth metal, or possibly a H⁺ ion. If the cation is a proton, the zeolite becomes a strong Brønsted acid. All these characteristics make zeolites useful for many applications.

Today, nearly 60 different natural occurring zeolites are known, while 201 can be prepared synthetically [R. W. Broach, D. Jan, D. A. Lesch, S. Kulprathipanja, E. Roland, and P. Kleinschmit. Zeolites. In Ullmann's Encyclopedia Of Industrial Chemistry. Wiley, 2012]. These zeolites have different structures, due to different Si-O-Al linkages, and a different number of Si or Al atoms linked in each unit cell. This also creates different pore system of one-, two, or three-dimensions in the zeolite. As the pores are very regular, and around the same size in diameter as molecules, it is possible for zeolites to function as molecular sieves. Due to their chemical structure and molecular sieve properties, zeolite catalysts exhibit high selectivity for a variety of chemical reactions. Since most of the surface area and the active sites are within the zeolite, the shape of the pores and channels give rise to shape selective catalysis. Commonly there is distinguished between three types of shape selectivity:
1) Reactant shape selectivity: Only molecules small enough can enter the zeolite pores and undergo chemical transformation or be adsorbed.
2) Product shape selectivity: The size of the pores is too small, that not all possible products can diffuse out of the zeolite after reaction. This leads to an increased selectivity towards smaller molecules or isomers.
3) Restricted transition-state shape selectivity: Here the formation of too large transition state intermediates are prevented due to zeolite pore size.

Encapsulation of metal nanoparticles in a zeolite structure may protect the individual nanoparticles from contact with other nanoparticles, thereby preventing sintering of the nanoparticles when these are subjected to elevated temperatures. It would also be possible to utilize the new material as a bifunctional catalyst, which owns it activity from the inherint catalytic activity of the zeolite and the catalytic properties of the metal nanoparticles.

In spite of the great technological, environmental and economic interests, general methods for the stabilization of metal nanoparticles against sintering are far from being fully developed, although for some specific systems it has been achieved by optimizing the interaction of nanoparticles with a support material or by encapsulation of the metal particles [A.B. Laursen, K.T. Højholt, L.F. Lundegaard, S.B. Simonsen, S. Helveg, F. Schüth, M. Paul, J.-D. Grunwaldt, S. Kegnæs, C.H. Christensen, and K. Egeblad. Angew. Chem. Int. Edit., 122:3582, 2010*,* High-Temperature-Stable Catalysts by Hollow Sphere Encapsulation, P. M. Arnal, M. Comotti, F. Schüth, Angew. Chem. 2006, 118, 8404-8407*,* A Highly Reactive and Sinter-Resistant Catalytic System Based on Platinum Nanoparticles Embedded in the Inner Surfaces of CeO2 Hollow Fibers, Y. Dai, B. Lim, Y. Yang, C. M. Cobley, W. Li, E. C. Cho, B. Grayson, P. T. Fanson, C. T. Campbell, Y. Sun, and Y. Xia, Angew. Chem. Int. Ed. 2010, 49, 1-5*,* Encapsulation of Metal (Au, Ag, Pt) Nanoparticles into Mesoporous SBA-15 structure, J. Zhu, Z. Kónya, V. F. Puntes, I. Kiricsi, C. X. Miao, J. W. Agar, A. Paul Alivisatos, G. A. Somorjai, Langmuir 2003, 19, 4396-4410].

The encapsulation of nanoparticles is an area of increasing interest. This is a possible solution to the widely known problem of deactivation due to sintering. Several methods have been developed to produce sinter-stable nanoparticle catalyst, including encapsulating in mesoporous silica matrix or by using a protective shell [P.M. Arnal, M. Comotti, and F. Schuth. Angew. Chem. Int. Ed., 45:8224, 2006*,* N. Ren and Y.-H. Yang and. J. Catal., 251:182, 2007*,* S.H. Joo, J.Y. Park, C.-K. Tsung, Y. Yamada, and P. Yang. Nature Mater., 8:126, 2009*, and* L. W. Beakley, S.E. Yost, R. Cheng, and B.D. Chandler. Appl. Catal. A, 292:124, 2005].

By encapsulating metal nanoparticles in a zeolite matrix, the zeolites micropores allow small substrates to access the active sites, while big molecules are excluded. The confined space of the active sites may also enhance the formation of one product over another by shape selectivity. In addition, the thermal stability of zeolites and high surface area, makes zeolites particularly useful for this application. Post treatment deposition of nanoparticles inside zeolites has been reported in literature [T.M. Salama, R. Ohnishi, T. Shido, and M. Ichikawa. J. Catal., 156:169, 1996*,* Y.-M. Kang and B.-Z. Wan. Appl. Catal. A: General, 128:53, 1995*, and* Z.X. Gao, Q. Sun, H.-Y. Chen, X. Wang, and W.M.H. Sachtler. Catal. Lett., 2001:1, 72].

A limitation of these methods is however that they require zeolites containing cages. By post-synthesis treatments the nanoparticles are in the cages and/or in the pores of the zeolite and it can be difficult to control the metal loading and the size and location of the nanoparticles. Both Laursen et al. [A.B. Laursen, K.T. Højholt, L.F. Lundegaard, S.B. Simonsen, S. Helveg, F. Schüth, M. Paul, J.-D. Grunwaldt, S. Kegnæs, C.H. Christensen, and K. Egeblad. Angew. Chem. Int. Edit., 122:3582, 2010] and Højholt et al. [K.T. Højholt, A.B. Laursen, S. Kegnæs, and C.H. Christensen. Top. Catal., 54:1026, 2011] have successfully synthesised a MFI zeolite containing gold nanoparticles (size 1-3 nm), which showed to be highly stably versus sintering. In addition, the gold nanoparticles were only accessible through the micropores of the zeolite. The synthesis is however time-consuming and requires expensive additives and a complicated reaction procedure.

US 2005/239634 A1 discloses a crystalline inorganic material organized in a mesostructure, where the inorganic material can be a metal oxide. The document further discloses a method for producing mesostructured zeolites.

Laursen et al discloses in Ang. Chem. Int. Ed., 49 (2010), p. 3504-3507 a bottom-up approach for the preparation of hybrid zeolite-nanoparticle materials containing small metal nanoparticles dispersed throughout the zeolite crystals. The nanoparticles are contained inside the zeolites. The bottom-up approach is an approach where the metal nanoparticles are encapsulated in an amorphous silica matrix and then hydrothermally treated for zeolite crystallisation to take place. This method is however cumbersome.

So, despite the growing demand, a fast, efficient and economically process for manufacturing zeolite or zeotype encapsulated metal nanoparticles which are sinter-resistant that can be scaled up for industrial application has not yet been reported.

### Summary of the invention

Disclosed herein in a first aspect of the invention is a method for producing a zeolite, zeolite-like or zeotype structure with selective formation of metal, metal oxide or metal sulphide nanoparticles and/or clusters inside the zeolite, zeolite-like or zeotype structure, the method comprising the steps of:
a) treating a zeolite, zeolite-like or zeotype structure with an alkaline solution in the presence of a surfactant thereby obtaining a zeolite, zeolite-like or zeotype structure having a partly dissolved structure;
b) heating the partly dissolved zeolite, zeolite-like or zeotype structure to an elevated temperature between 110-200 °C, thereby obtaining a zeolite, zeolite-like or zeotype structure with an additional porosity situated inside the structure;
c) impregnating the zeolite, zeolite-like or zeotype structure with the additional porosity situated inside the structure with a solution comprising at least one transition metal precursor selected from nitrates, carbonates, acetates, sulphates, chlorides, carbonyls or formates thereby obtaining a transition metal precursor containing zeolite, zeolite-like or zeotype structure; and
d) obtaining the zeolite, zeolite-like or zeotype structure with selective formation of metal, metal oxide or metal sulphide nanoparticles and/or clusters inside the zeolite, zeolite-like or zeotype structure by:
   i. subjecting the transition metal precursor containing zeolite, zeolite-like or zeotype structure to a reactive atmosphere selected from a stream of hydrogen gas (H₂), a stream of oxygen gas (O₂), a stream of hydrogen sulfide gas (H2S), a stream of methane gas (CH₄), or a stream of ammonia gas (NH3) at an elevated temperature, or
   ii. decomposing the transition metal precursor containing zeolite, zeolite-like or zeotype structure by thermal treatment,
   wherein the transition metal, metal oxide or metal sulphide nanoparticle particles are selectively positioned inside the zeolite, zeolite-like or zeotype structure.

By formation of transition metal, metal oxide or metal sulphide nanoparticles and/or clusters inside the zeolite, zeolite-like or zeotype is meant that only a small fraction, i.e. substantially none, of the nanoparticles and/or cluster will be found on the external surfaces of the structure. Thus, the nanoparticles and/or cluster will primarily be situated inside or on the internal surfaces of the structure.

By transition metal, metal oxide or metal sulphide nanoparticles - also referred to as metal nanoparticles - are meant particles typically between 1-100 nm that may or may not have size-related properties that differs significantly from the bulk material.

By transition metal, metal oxide or metal sulphide clusters - also referred to as metal clusters - are meant a small ensemble of metal atoms grouped close together which can have direct metal bonding interactions or interactions through a bridging ligand. Typically, clusters are smaller than nanoparticles.

By the above method is obtained a zeolite structure where the nanoparticles/clusters are evenly distributed inside the crystalline zeolite structure. The zeolite framework keeps the individual nanoparticle/cluster separated and slows down migration and coalescence, which is highly advantageous since it increases the thermal stability.

Due to the position on the internal surface of the zeolite, the metal nanoparticles/clusters remain accessible through the porous structure of the zeolites, however, but are thus protected from sintering with other nanoparticles at elevated temperatures due to the physical separation. Furthermore, the zeolite micropores ensure that the substrate has access to the encaptured nanoparticles/clusters.

The transition metal, metal oxide or metal sulphide nanoparticles/clusters inside the zeolite, zeolite-like or zeotype is refrained from sintering, thereby preserving the nanoparticles high surface area required for the effective catalytic activity. This novel approach for preparation of sintering stable nanoparticle/cluster catalysts is rather simple and can be used to e.g. develop novel automotive exhaust catalyst.

Disclosed herein is a zeolite, zeolite-like or zeotype structure with selective formation of metal, metal oxide or metal sulphide nanoparticles and/or clusters inside the zeolite, zeolite-like or zeotype structure obtained by the method according to the first aspect of the invention.

Disclosed herein is a zeolite, zeolite-like or zeotype structure with selective formation of metal, metal oxide or metal sulphide nanoparticles and/or clusters inside the zeolite, zeolite-like or zeotype structure.

The zeolite, zeolite-like or zeotype structure may have micropores with a pore size between 0-2 nm, or mesopores with a pore size between 2-50 nm, or macropores with a pore size between 50-100 nm.

The transition metal, metal oxide or metal sulphide nanoparticles/clusters may have a particle size between 0-40 nm, or between 1-30 nm, or between 1-20 nm, or between 1-10 nm, or between 1-5 nm, or between 2-3 nm.

The transition metal, metal oxide or metal sulphide nanoparticles may be distributed selectively on internal surfaces of the zeolite zeolite, zeolite-like or zeotype.

Any two consecutive transition metal, metal oxide or metal sulphide nanoparticles and/or clusters inside the zeolite, zeolite-like or zeotype may have an internal distance *d* between them, wherein the nearest neighbour index between any different two consecutive transition metal, metal oxide or metal sulphide nanoparticles inside the zeolite, zeolite-like or zeotype is at least 1

Also, disclosed herein is the use of a zeolite, zeolite-like or zeotype structure as catalytic material for chemical reactions, for hydroisomerization, cracking and reforming of petrochemicals, for the synthesis of liquid hydrocarbons from synthesis gas by means of the Fisher-Tropsch process or Mobile process, for production of substitute natural gas from synthesis gas by methanation, for *in-situ* generation of hydrogen peroxide (H₂O₂) from hydrogen (H2) and oxygen (O₂), for epoxidation of propylene, for selective oxidations and hydrogenations, for catalytic exhaust and/or flue-gas cleaning, for conversion of ammonia to N₂O, NOₓ and N₂, for the synthesis of olefins in methanol to olefins reactions (MTO), for the synthesis of methanol to hydrocarbons reactions (MTH), or for the synthesis of methanol to gasoline reactions (MTG).

### Brief description of the figures

Figure 1 shows a schematic illustration of the method for producing zeolite, zeolite-like or zeotype encapsulated metal nanoparticles/clusters.
Figures 2a-d show the TEM images of four different silicalite-1 (S1) base zeolites; a traditionally synthesised gold (Au) impregnated zeolite of the type Au/S1 shown in figure 2a, a gold impregnated meso-zeolite (Au/meso-S1) in figure 2b, a gold fig. 1) impregnated APS-zeolite (Au/APS-S1) in figure 2c, and a gold impregnated recrystallized zeolite (Au/recryst-S1) according the invention in figure 2d.
Figure 2e shows two high-angle annular dark-field imaging scanning transmission electron microscope (HAADF-STEM) images of the Au/recryst-S1 zeolite according to the invention.
Figures 3a-d show a particle size histogram and the normal distribution of the gold particles impregnated in the Au/S1 zeolite structure of figure 2a displayed in figure 3a, the Au/meso-S1 zeolite structure of figure 2b displayed in figure 3b, the Au/APS-S1 zeolite structure of figure 2c displayed in figure 3c, and the Au/recryst-S1 zeolite structure of figure 2d displayed in figure 3d.
Figures 4a-d show X-ray Photoelectron Spectroscopy (XPS) measurements of the Au/S1 zeolite (figure 4a), the Au/meso-S1 zeolite (figure 4b), the Au/APS-S1 zeolite (figure 4c), and the Au/recryst-S1 zeolite (figure 4d).
Figures 5a-d show X-ray powder diffraction (XRPD) analysis of the Au/S1 zeolite (figure 5a), the Au/meso-S1 zeolite (figure 5b), the Au/APS-S1 zeolite (figure 5c), and the Au/recryst-S1 zeolite (figure 5d).
Figures 6 and 7a-d show bio-ethanol oxidation to acetaldehyde/acetic acid/CO₂ using the four zeolites shown in figures 2a-d.
Figures 8a-d show the nitrogen N₂ physisorption using the Au/S1 zeolite (figure 8a), the Au/meso-S1 zeolite (figure 8b), the Au/APS-S1 zeolite (figure 8c), and the Au/recryst-S1 zeolite (figure 8d).
In figure 9, the Barrett-Joyner-Halenda (BJH) pore size distributions derived from the desorption branch of the nitrogen physisorption isotherms.
Figures 10a-b show the TEM images of two different silicalite-1 (S1) base zeolites; a traditionally synthesised palladium (Pd) impregnated zeolite of the type Pd/S1 (figure 10a) and a palladium impregnated recrystallized zeolite (Pd/recryst-S1) according the invention (figure 10b).
Figure 11 show the yield from the hydrogenation of mesityl oxide and isophorone performed at room temperature and under 1 bar of H₂ using Pd/Recryst-S1 as hydrogenation catalyst.
Figures 12a-b show the TEM images of two different silicalite-1 (S1) base zeolites; a traditionally synthesised nickel (Ni) impregnated zeolite of the type 1wt% Ni/Si is shown in figure 12a, and a nickel impregnated recrystallized zeolite (Ni/Recryst-S1) according the invention is shown in figure 12b.

### Detailed description of the invention

In the following detailed description of the invention, reference is made to the examples, including tables and figures.

Throughout the description, when zeolites are mentioned this is meant to comprise zeolites, zeolite-like materials and zeotypes unless otherwise specifically mentioned.

By zeolite, zeolite-like and zeotype particle is meant zeolite, zeolite-like and zeotype crystal or zeolite, zeolite-like and zeotype material.

By the term zeolite-like is meant non-silicon comprising material. Examples of zeolite-like materials are non-silicon comprising materials such as aluminum phosphate (AIPO4) molecular sieves, known as AIPO'S. The phosphorous compound can be selected from the group consisting of phosphoric acid, phosphate salts and mixtures thereof. By the term "phosphate salts" is meant salts of phosphates, monohydrogen phosphates and dihydrogen phosphates.

In this application a new method for producing zeolite, zeolite-like or zeotype structure with selective formation of metal, metal oxide or metal sulphide nanoparticles and/or clusters inside the zeolite, zeolite-like or zeotype structure is presented according to a first aspect of the invention.

The method according to the first aspect of the invention comprises a number of steps including a first step of treating a zeolite, zeolite-like or zeotype structure with an alkaline solution in the presence of a surfactant thereby obtaining a zeolite, zeolite-like or zeotype structure having a partly dissolved structure.

In one or more embodiments, the alkaline solution is selected from bicarbonates, carbonates, ammonia hydroxide, sodium hydroxide, and potassium hydroxide.

In one or more embodiments, the surfactant is selected from anionic, cationic, zwitterionic and nonionic surfactants. These surfactants may include C8-C18 alkyltrimethylammonium bromides, phencyclidine hydrochloride (P123), polyoxyethylene 20 cetyl ether (Brij-58), and polyoxypropylene-polyoxyethylene block polymer polyglycol (F127).

In one or more embodiments, the surfactant is cetyl trimethylammonium bromide (CTAB).

The method according to the first aspect of the invention further comprises the step of heating the partly dissolved zeolite, zeolite-like or zeotype structure to an elevated temperature between 110-200 °C thereby obtaining a zeolite, zeolite-like or zeotype structure with an additional porosity situated inside the structure. By heating the structure, the surfactant is removed.

In one or more embodiments, heating the partly dissolved zeolite, zeolite-like or zeotype structure to an elevated temperature is done in an autoclave.

In one or more embodiments, the elevated temperature is between 110-190 °C.

In one or more embodiments, the elevated temperature is between 110-180 °C.

In one or more embodiments, the elevated temperature is between 120-170 °C.

In one or more embodiments, the elevated temperature is between 120-160 °C.

In one or more embodiments, the elevated temperature is between 130-150 °C.

In one or more embodiments, the elevated temperature is between 135-145 °C.

The method according to the first aspect of the invention further comprises the step of impregnating the zeolite, zeolite-like or zeotype structure with the additional porosity situated inside the structure with a solution comprising at least one transition metal precursor thereby obtaining a transition metal precursor containing zeolite, zeolite-like or zeotype structure.

In one or more embodiments, the transition metal precursor comprises one or more metal precursors selected from nitrates, carbonates, acetates, sulphates, chlorides, carbonyls or formates.

In one or more embodiments, the transition metal precursor comprises one or more metal(s) selected from the group consisting of group 4 elements, group 6 elements, group 7 elements, group 8 elements, group 9 elements, group 10 elements, group 11 elements or group 12 elements or mixtures thereof. The group elements are defined by the new IUPAC numbering.

In one or more embodiments, the transition metal precursor comprises one or more metal(s) selected from the group of manganese, rhenium, iron, ruthenium, osmium, cobalt, rhodium, iridium, nickel, palladium, platinum, copper, silver, gold, cadmium, molybdenum, zinc, vanadium, chrome, titanium or mixtures thereof.

In one embodiment or more embodiments, the metal is selected from the group of manganese, rhenium, iron, ruthenium, osmium, cobalt, rhodium, iridium, nickel, palladium, platinum, copper, silver, and gold.

In one embodiment or more embodiments, the metal is selected from the group of iron, cobalt, nickel, palladium, platinum, copper, silver and gold.

In one embodiment or more embodiments, the metal is gold.

In one or more embodiments, the transition metal precursor comprises one or more metal alloys(s) selected from the group of molybdenum-cobalt, molybdenum-nickel, molybdenum-platinum, iron-ruthenium, iron-cobalt, iron-nickel, ruthenium-cobalt, ruthenium-copper, ruthenium-platinum, cobalt-palladium, cobalt-platinum, cobalt-gold, nickel-platinum, iridium-platinum, palladium-platinum, palladium-copper, palladium-gold, platinum-gold, or silver-gold. One of the metals in the metal alloy may be present in an amount of from 1 to 50%. The optimal weight ratio between the metals in the alloy depends on the metal alloy.

The metal or mixture of metal precursors might form into the respective oxides or nitrates. This can happen either during the manufacturing process or in the end product.

The method according to the invention may prior to impregnation of the zeolite, zeolite-like or zeotype structure with an additional porosity situated inside the structure be dried. The drying is performed in order to improve the impregnation of the recrystallized material. The drying can be achieved by keeping the calcined materials in a dry atmosphere or by separately drying the material prior to the impregnation by other means. The drying may be performed at elevated temperatures, preferably under reduced pressure or in a flow of dry gas.

The method according to the first aspect of the invention subsequently comprises the step of obtaining the zeolite, zeolite-like or zeotype structure with selective formation of metal, metal oxide or metal sulphide nanoparticles and/or clusters inside the zeolite, zeolite-like or zeotype structure by either: i) reducing the transition metal precursor containing zeolite, zeolite-like or zeotype structure in a reactive atmosphere, or ii) decomposing the transition metal precursor containing zeolite, zeolite-like or zeotype structure by thermal treatment.

This causes the transition metal, metal oxide or metal sulphide nanoparticle particles to be selectively positioned inside the zeolite, zeolite-like or zeotype structure.

In one or more embodiments, the reactive atmosphere in alternative i) is a stream of hydrogen gas (H₂), a stream of oxygen gas (O₂), a stream of hydrogen sulfide gas (H₂S), a stream of methane gas (CH₄), or a stream of ammonia gas (NH₃).

In one or more embodiments, the reactive atmosphere in alternative i) is a stream of hydrogen gas (H₂) and the transition metal precursor forms metal nanoparticles.

The term "metal nanoparticles" used throughout this application also includes mixtures of metals nanoparticles. By metal nanoparticles is also meant metal oxide nanoparticles and metal sulfide nanoparticles.

In one or more embodiments, the reactive atmosphere in alternative i) is a stream of oxygen gas (O₂) and the transition metal precursor forms metal oxides.

In one or more embodiments, the reactive atmosphere in alternative i) is a stream of hydrogen sulfide gas (H₂S) and the transition metal precursor forms metal sulfides.

In one or more embodiments, the reactive atmosphere in alternative i) is a stream of methane gas (CH₄) and the transition metal precursor forms metal carbides.

In one or more embodiments, the reactive atmosphere in alternative i) is a stream of ammonia gas (NH₃) and the transition metal precursor forms metal nitrides.

In one embodiment the flow of the stream of gas is applied for around 1-7 hours, 4-6 hours, or 2-3 hours. This holds true for all of the above mentioned examples of gaseous compounds, but depends on the metal type.

In one or more embodiments, the thermal treatment in alternative ii) is performed in the temperature range from 200 to 800 °C.

In one or more embodiments, the thermal treatment in alternative ii) is performed in the temperature range from 200 to 600 °C.

In one or more embodiments, the thermal treatment in alternative ii) is performed in the temperature range from 200 to 500 °C.

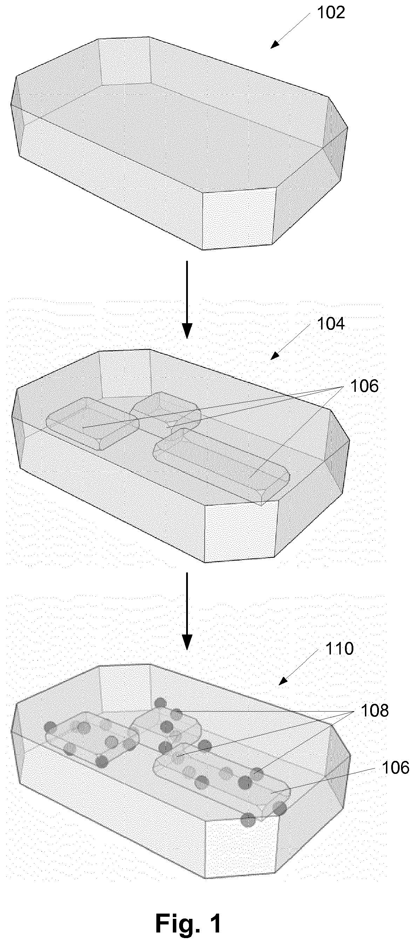

The method according to the first aspect of the invention is illustrated schematically in figure 1. In figure 1, the zeolite, zeolite-like or zeotype structure 102 is first recrystallised by treating it with an alkaline solution in the presence of a surfactant thereby obtaining a zeolite, zeolite-like or zeotype structure having a partly dissolved structure. The partly dissolved zeolite, zeolite-like or zeotype structure is afterwards heated to an elevated temperature, normally between 110-200 °C, thereby obtaining a recrystallized zeolite, zeolite-like or zeotype structure 104 with an additional porosity 106 situated inside the structure. The additional porosity 106 inside the zeolite structure is illustrated as a number of boxes for illustrative purposes, but is in no way limited to having such a shape.

After obtaining the zeolite structure 104 with the additional porosity 106, the zeolite structure 104 is impregnated with a solution comprising at least one transition metal precursor 108 thereby obtaining a transition metal impregnated zeolite, zeolite-like or zeotype structure. The transition metal impregnated zeolite, zeolite-like or zeotype structure is either reduced or decomposed to yield the final transition metal, metal oxide or metal sulphide nanoparticle containing zeolite, zeolite-like or zeotype structure 110 as depicted as the last structure in figure 1.

As is illustrated in figure 1, the impregnation of the zeolite structure with the additional porosity 106 ensures that the transition metal, metal oxide or metal sulphide particles and/or clusters 108 are selectively positioned inside the zeolite, zeolite-like or zeotype structure, i.e. on internal surfaces of the transition metal, metal oxide or metal sulphide nanoparticle containing zeolite, zeolite-like or zeotype structure. Thus, no transition metal oxide or metal sulphide particles/clusters are observed on the external surfaces of the transition metal particle, i.e. on the outside of the transition metal particle.

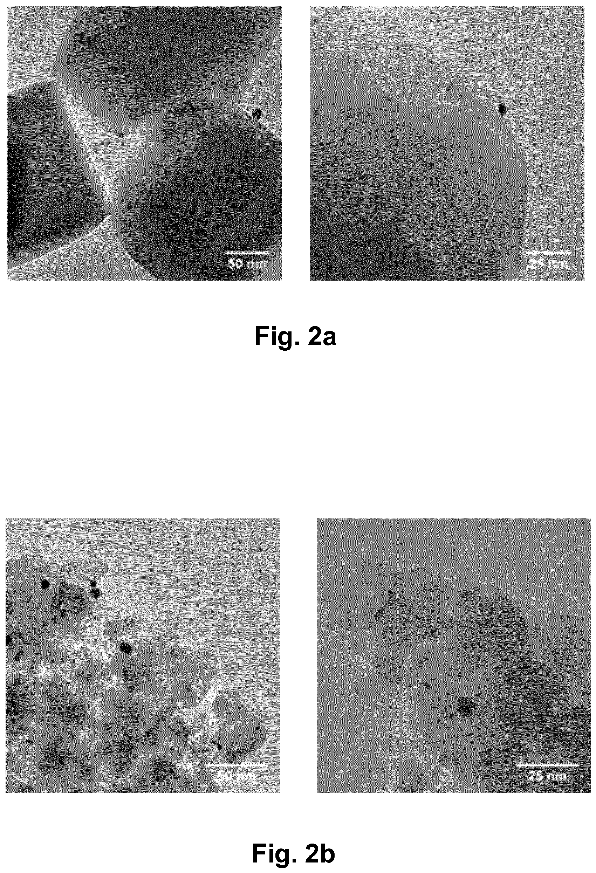

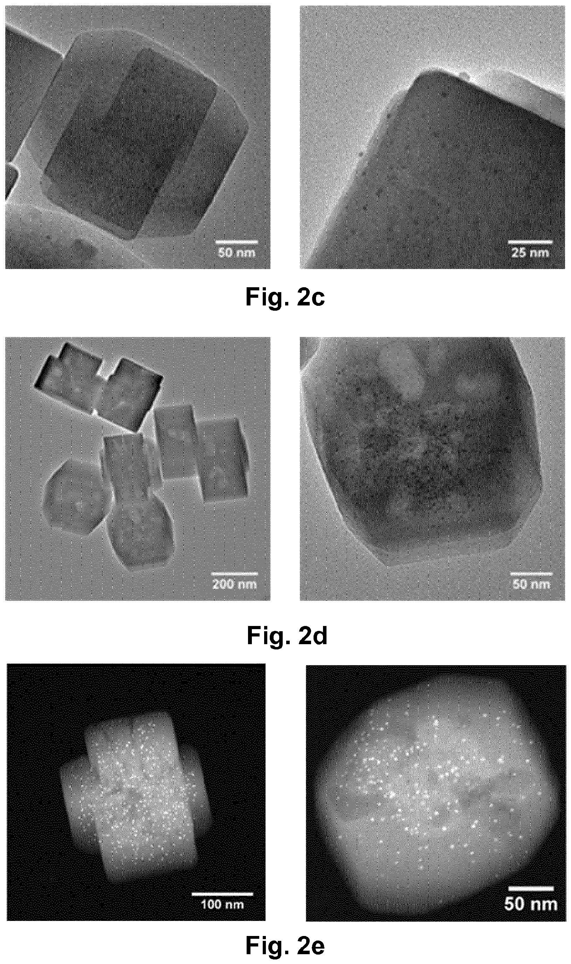

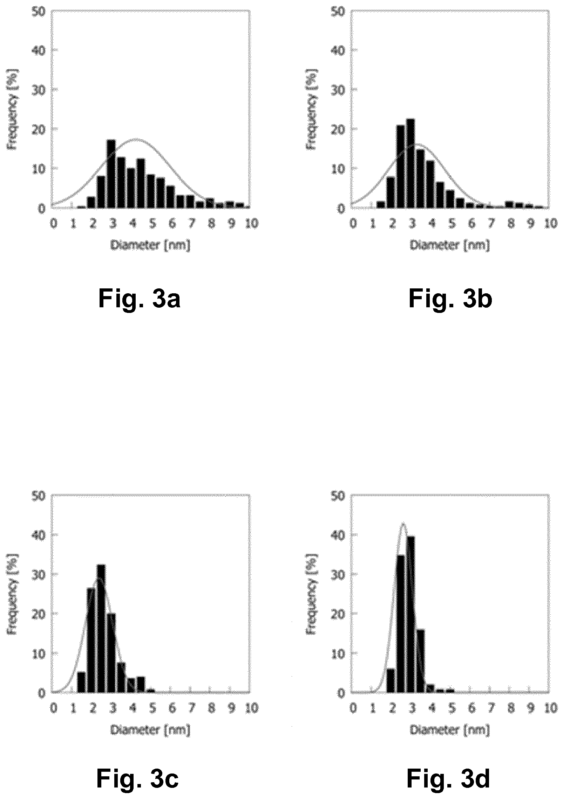

When the steps involved in the recrystallization of the zeolite structure (steps a and b) are omitted, transition metal, metal oxide or metal sulphide particles/clusters are also observed on the outside of the zeolite, zeolite-like or zeotype structure as is discussed in connection with figures 2 and 3. Thus, the recrystallization process ensures that a selective positioning of the transition metal, metal oxide or metal sulphide particles is obtained. An explanation for this observation may be that i) the alkaline treatment causes the formation of intra-particle voids and defects that is filled up with the transition metal precursor solution, and ii) that the confined space of the zeolite framework provide ideal conditions for the preparation of small and disperse nanoparticles inside the zeolite crystal. Furthermore, the recrystallization process may remove defects that prevent the formation of nanoparticles on the external surface of the zeolite.

Independently of what mechanism / combination of processes or chemical substances that ensures the selective positioning of the transition metal particles inside of the zeolite structure, the selectivity has a number of advantages.

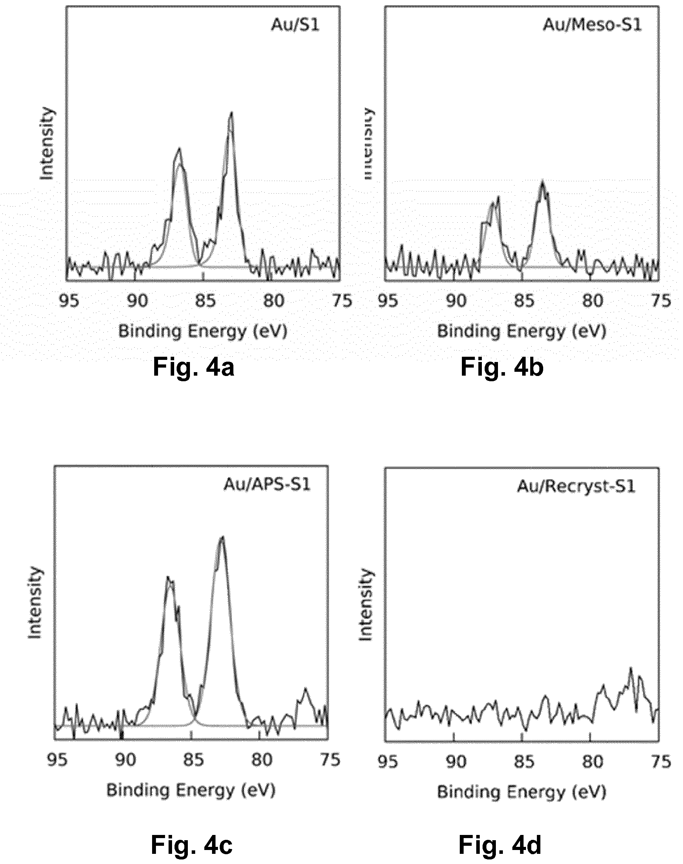

The encapsulation of metal nanoparticles within the zeolite structure inhibits sintering, thereby preserving their high surface area required for the effective catalytic activity. The increase in catalytic properties of the transition metal, metal oxide or metal sulphide nanoparticle containing zeolite, zeolite-like or zeotype is clearly seen and discussed in connection with figure 4.

In one or more embodiments, the zeolite, zeolite-like or zeotype structure has a framework type selected from BEA, FAU, MFI, MEL MOR, CHA or MTW. Alternative frameworks can also be imagined.

In one or more embodiments, the zeolite, zeolite-like or zeotype structure is silica based. Possible silica sources for zeolites may be bulk silica of different quality and alumina contamination, including pure silica, fumed silica, sodium silicate or other soluble silicate salts, precipitated silica, tetraethyl orthosilicate and other alkoxy-silicates, silicic acid, etc.

In one or more embodiments, the zeolite, zeolite-like or zeotype structure is aluminium based. Possible aluminium sources for zeolites may be aluminium nitrate, aluminium sulphate, aluminium phosphate, sodium aluminate and more.

In one or more embodiments, the zeolite, zeolite-like or zeotype structure has micropores with a pore size between 0-2 nm.

In one or more embodiments, the zeolite, zeolite-like or zeotype structure has micropores with a pore size between 0.5-2 nm.

In one or more embodiments, the zeolite, zeolite-like or zeotype structure has micropores with a pore size between 1-2 nm.

In one or more embodiments, the zeolite, zeolite-like or zeotype structure has mesopores with a pore size between 2-50 nm.

In one or more embodiments, the zeolite, zeolite-like or zeotype structure has mesopores with a pore size between 10-40 nm.

In one or more embodiments, the zeolite, zeolite-like or zeotype structure has mesopores with a pore size between 15-30 nm.

In one or more embodiments, the zeolite, zeolite-like or zeotype structure has mesopores with a pore size between 20-30 nm.

In one or more embodiments, the zeolite, zeolite-like or zeotype structure has mesopores with a pore size between 40-50 nm.

In one or more embodiments, the zeolite, zeolite-like or zeotype structure has mesopores with a pore size between 2-15 nm.

In one or more embodiments, the zeolite, zeolite-like or zeotype structure has macropores with a pore size between 50-100 nm.

In one or more embodiments, the zeolite, zeolite-like or zeotype structure has macropores with a pore size between 60-90 nm.

In one or more embodiments, the zeolite, zeolite-like or zeotype structure has macropores with a pore size between 70-80 nm.

In one or more embodiments, the zeolite, zeolite-like or zeotype structure has macropores with a pore size between 50-60nm.

In one or more embodiments, the zeolite, zeolite-like or zeotype structure has macropores with a pore size between 50-70 nm.

In one or more embodiments, the zeolite, zeolite-like or zeotype structure has macropores with a pore size between 70-100 nm.

In one or more embodiments, the zeolite, zeolite-like or zeotype structure has macropores with a pore size between 80-90 nm.

Depending on the application, the transition metal, metal oxide or metal sulphide nanoparticles may vary in size quit significantly. Thus, in one or more embodiments, the transition metal, metal oxide or metal sulphide nanoparticles may have a particle size between 0-40 nm.

In one or more embodiments, the transition metal, metal oxide or metal sulphide nanoparticles may have a particle size between 1-30 nm.

In one or more embodiments, the transition metal, metal oxide or metal sulphide nanoparticles may have a particle size between 1-20 nm.

In one or more embodiments, the transition metal, metal oxide or metal sulphide nanoparticles may have a particle size between 1-10 nm.

In one or more embodiments, the transition metal, metal oxide or metal sulphide nanoparticles may have a particle size between 1-5 nm.

In one or more embodiments, the transition metal, metal oxide or metal sulphide nanoparticles may have a particle size between 2-3 nm.

The transition metal, metal oxide or metal sulphide nanoparticles may be distributed selectively inside the zeolite zeolite, zeolite-like or zeotype.

In one or more embodiments, the transition metal, metal oxide or metal sulphide nanoparticles may be evenly distributed inside the zeolite zeolite, zeolite-like or zeotype such that any two consecutive transition metal, metal oxide or metal sulphide nanoparticles inside the zeolite, zeolite-like or zeotype has an internal distance d between them, wherein the nearest neighbour index between any different two consecutive transition metal, metal oxide or metal sulphide nanoparticles inside the zeolite, zeolite-like or zeotype is at least 1.

By nearest neighbour index is meant the ratio of the observed distance between any two different nanoparticles divided by the expected distance, where the expected distance is the average distance between neighbours in a hypothetical random distribution.

In one or more embodiments, the wherein the nearest neighbour index between any different two consecutive transition metal, metal oxide or metal sulphide nanoparticles inside the zeolite, zeolite-like or zeotype is between 1-10, or between 2-5.

The transition metal, metal oxide or metal sulphide nanoparticle containing zeolite, zeolite-like or zeotype have increased thermal stability and resistance against sintering.

By impregnating transition metal, metal oxide or metal sulphide nanoparticle in a zeolite, zeolite-like or zeotype zeolite matrix, shape selective catalysis is possible as described in the introduction.

In one embodiment the size of the zeolite crystals are in the range of 0.1 to 5 micrometer, or 0.1 to 2 micrometer, or 0.1 to 0.5 micrometer.

In one or more embodiments the amount of transition metal, metal oxide or metal sulphide nanoparticles are in the range of 0.1-25 wt%, 0.5-20 wt%, 0.5-10 wt%, 0.5-5%, 1.0-5 wt %, 1-2 wt %, or around 1 wt %.

In one embodiment the zeolite, zeolite-like or zeotype particle has a Vp value in the range of 0.1 to 0.4 cm³/g, or 0.2 to 0.4 cm³/g.

In one embodiment the zeolite, zeolite-like or zeotype particle has a BET surface area of 200 to 500 m²/g or 350 to 400 m²/g or around 375 m²/g.

Figures 2a-d show the TEM images of four different silicalite-1 (S1) base zeolites. In figure 2a, the TEM image of a traditionally synthesised gold (Au) impregnated zeolite of the type Au/S1 is shown, where no re-crystallization step has been performed prior to impregnating the zeolite with gold. In figure 2b, the TEM image of a gold impregnated meso-zeolite (Au/meso-S1) is show - again re-crystallization has been omitted when synthesising this structure. In figure 2c, the TEM image of a gold impregnated (3-aminopropyl)trimethoxysilane modified (APS) zeolite (Au/APS-S1) is shown. Again, no re-crystallisation has been used. In figure 2d, the TEM image of a gold impregnated recrystallized zeolite (Au/recryst-S1) according the invention is shown.

As can be seen in figures 2a and 2b, the 'traditional' zeolite/meso-zeolite structures impregnated with gold have gold particles positioned on the internal surfaces inside the zeolite/meso-zeolite structure and on the outer surface of the zeolite. The 'outer' gold particles can be seen as the larger particles which have formed larger particles with a smaller total surface area.

The Au/APS-S1 structure shown in figure 2c also shows an uneven distribution in the size of the metal particles compared to the Au/rectryst-S1 structure according to the invention shown in figure 2d. This implies that metal particles are also distributed on the outer surface of the Au/APS-S1 structure shown in figure 2c and not only on the internal surfaces as is observed in Au/recryst-S1 in figure 2d.

Figure 2e shows two high-angle annular dark-field imaging scanning transmission electron microscope (HAADF-STEM) images of the Au/recryst-S1 zeolite according to the invention. In these images, the even distribution of the gold particles inside in the zeolite can be seen clearly.

Figures 3a-d show a particle size histogram and the normal distribution of the gold particles impregnated in the Au/S1 zeolite structure of figure 2a displayed in figure 3a, the Au/meso-S1 zeolite structure of figure 2b displayed in figure 3b, the Au/APS-S1 zeolite structure of figure 2c displayed in figure 3c, and the Au/recryst-S1 zeolite structure of figure 2d displayed in figure 3d. From figures 3a-d, it can clearly be seen that the particles in the Au/recryst-S1 structure have a much more narrow distribution in size and further have a smaller average size compared to the other structures.

Figures 4a-d show X-ray Photoelectron Spectroscopy (XPS) measurements of the Au/S1 zeolite structure of figure 2a displayed in figure 4a, the Au/meso-S1 zeolite structure of figure 2b displayed in figure 4b, the Au/APS-S1 zeolite structure of figure 2c displayed in figure 4c, and the Au/recryst-S1 zeolite structure of figure 2d displayed in figure 4d. The XPS measurements show that gold is the presence of gold on the outer surface of the Au/Si zeolite in figure 4a. However, no gold was observed on the outer surface of the Au/recryst-S1 zeolite according to the invention shown in figure 4d. This observation supports the observations form the TEM images in figures 2a-d showing that the gold particles are positioned selectively on the inside of the zeolite only for the zeolite structure synthesised according to the method of the invention.

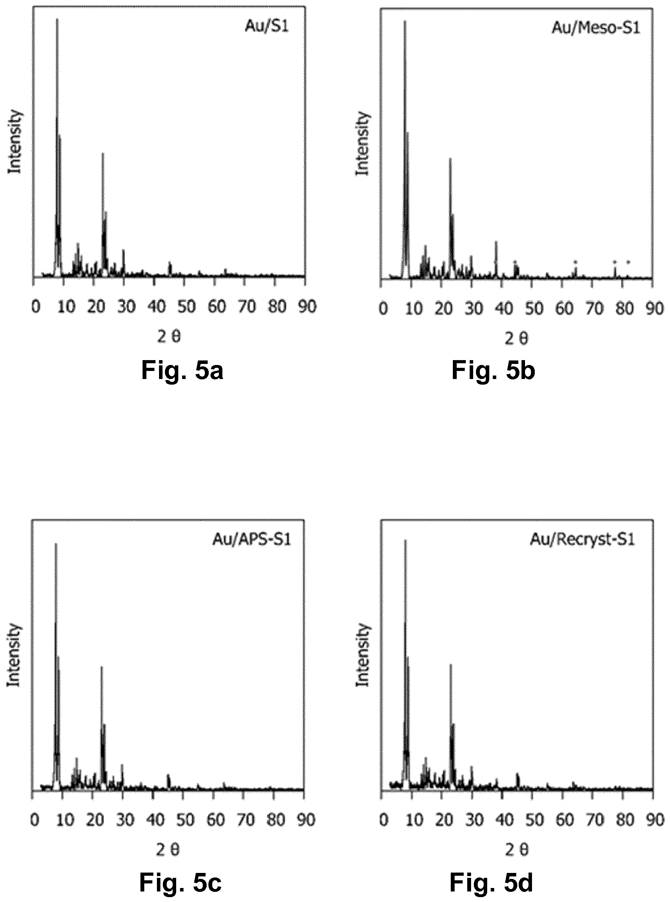

Figures 5a-d show X-ray powder diffraction (XRPD) analysis of the Au/S1 zeolite structure of figure 2a displayed in figure 5a, the Au/meso-S1 zeolite structure of figure 2b displayed in figure 5b, the Au/APS-S1 zeolite structure of figure 2c displayed in figure 5c, and the Au/recryst-S1 zeolite structure of figure 2d displayed in figure 5d.

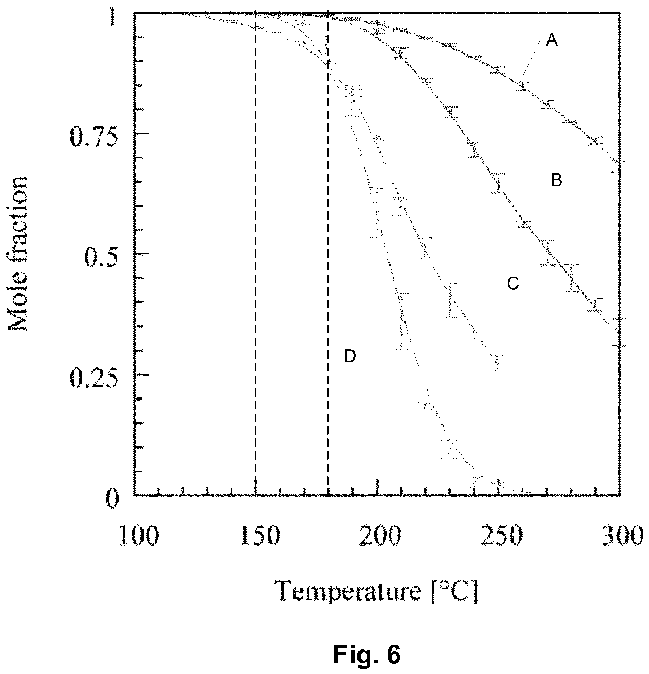

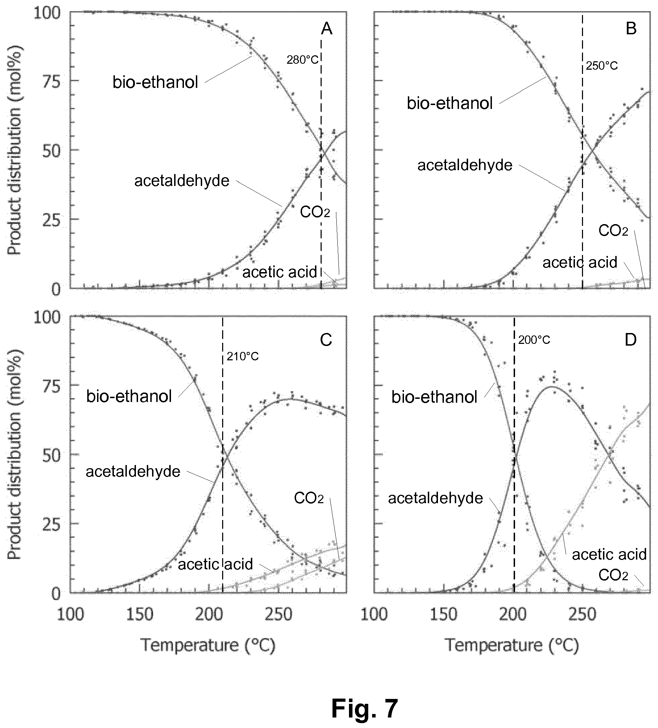

Figures 6 and 7a-d shows the measurement of the bio-ethanol oxidation to acetaldehyde/acetic acid/CO₂ using the four zeolites shown and described in figures 2a-d. In figure 6, Au/S1 is represented as line A, Au/meso-S1 as line B, Au/APS-S1 as line C, and Au/recryst-S1 as line D. The mole fraction indicates the amount of bio-ethanol in the solution normalised to the starting concentration of bio-ethanol.

As can be seen in figure 6, below approximately 150 °C, bio-ethanol oxidation to acetaldehyde only occurs when using the Au/APS-S1 zeolite (line C). However, once the temperature exceeds 180 °C, the Au/recryst-S1 zeolite according to this invention (line D) is by far the most efficient catalyst for the bio-ethanol oxidation.

Figures 7a-d show the product distribution (bio-ethanol, acetaldehyde, acetic acid, and CO₂) as a function of the reaction temperature for the catalysts Au/S1 (figure 7a), Au/meso-S1 (figure 7b), Au/APS-S1 (figure 7c), and Au/recryst-S1 (figure 7d).

The Au/S1 catalyst shown in figure 7a is highly selective toward the formation of acetaldehyde and reaches 50% conversion of ethanol around 280°C.

The Au/Meso-S1 catalyst shown in figure 7b is more active and reaches 50% conversion around 250°C. Only small amounts of CO₂ and acetic acid are observed at temperatures above 250°C. The slightly higher activity of the Au/Meso-S1 catalyst compared to the Au/S1 catalyst may be related to the increased external surface area, which results in a better dispersion of the Au nanoparticles.

The surface-functionalized Au/APS-S1 catalyst shown in figure 7c is more active than both Au/S1 and Au/Meso-S1 shown in figures 7a and 7b, respectively, and reaches 50% conversion of ethanol around 210°C. At temperatures above 240°C, however, the catalyst results in large amounts of acetic acid and CO₂, which significantly decreases the acetaldehyde yield.

The Au/recryst-S1 catalyst according to the invention and shown in figure 7d is the most active catalyst and reaches 50% conversion of ethanol with 98% selectivity toward acetaldehyde around 200°C. Above 200°C, the selectivity toward acetaldehyde starts to decrease because of the formation of acetic acid. At 270°C, both acetaldehyde and acetic acid are formed in 50% yield. Thus, at 270 °C a complete oxidation of bio-ethanol to acetaldehyde and acetic acid is observed for the Au/recryst-S1 zeolite according to the invention, whereas less than 20% of the bio-ethanol is oxidised to acetaldehyde when using the Au/S1 zeolite (figure 7a and line A in figure 6). Surprisingly, no CO₂ is formed when using the Au/recryst-S1 catalyst even at 300°C.

In conclusion, figures 6 and 7a-d show that the zeolite according to the invention shows significantly better catalytic properties than the other zeolites.

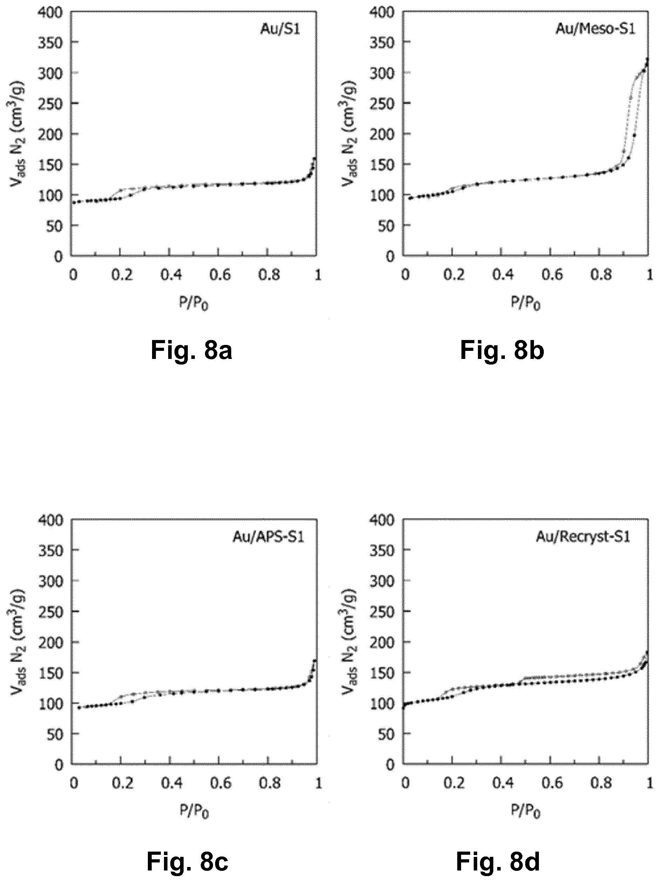

Figures 8a-d show the nitrogen N₂ physisorption using the Au/S1 zeolite (figure 8a), the Au/meso-S1 zeolite (figure 8b), the Au/APS-S1 zeolite (figure 8c), and the Au/recryst-S1 zeolite (figure 8d).

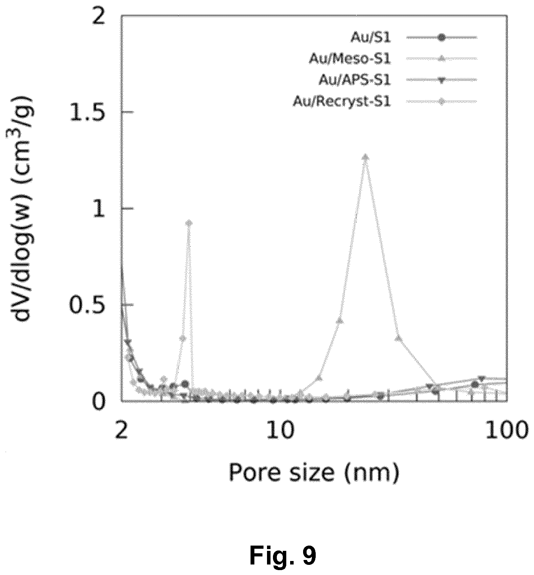

In figure 9, the Barrett-Joyner-Halenda (BJH) pore size distributions derived from the desorption branch of the nitrogen physisorption isotherms. Please note that the peak at 4nm for the Au/Recrys-S1 zeolite may be an artefact be caused by theso-called tensile strength effect.

The results from the N₂ physisorption measurements are summarized in table 1 below.

**Table 1. Results from N₂ physisorption analysis.**

| Catalyst | S_{BET} (m²/g)^{[a]} | Sₑₓₜ(m²/g)^{[b]} | V_{micro} (cm³/g)^{[b]} | Vₜₒₜ (cm³/g^{[c]} | HF^{[d]} |
|---|---|---|---|---|---|
| Au/S1 | 313 | 65 | 0.116 | 0.192 | 0.13 |
| Au/Meso-S1 | 353 | 139 | 0.100 | 0.304 | 0.13 |
| Au/APS-S1 | 333 | 80 | 0.118 | 0.201 | 0.14 |
| Au/Recryst-S1 | 374 | 102 | 0.124 | 0.232 | 0.15 |

| | | | | | |
|---|---|---|---|---|---|
| [a] Calculated by the BET method [b] Calculated by the t-plot method [c] Determined from the isotherm adsorption branch at around P/P0=0.95. [d] Hierarchy factor calculated by HF=(Sₑₓₜ/S_{BET})(V_{micro}/Vₜₒₜ). | | | | | |

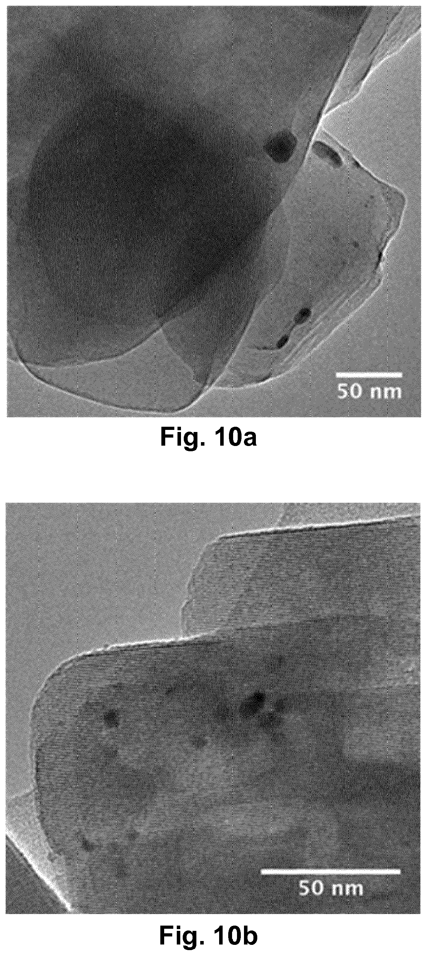

Figures 10a-b show the TEM images of two different silicalite-1 (S1) base zeolites. In figure 10a, a TEM image of a traditionally synthesised palladium (Pd) impregnated zeolite of the type Pd/S1 is shown, where no re-crystallization step has been performed prior to impregnating the zeolite with palladium. In figure 10b, a TEM image of a palladium impregnated recrystallized zeolite (Pd/recryst-S1) according to the invention is shown.

In figure 10a it can be seen that the Pd/S1 catalyst seem to have lengths of 250 nm and uniform coffin-shapes. As the images show, most of the Pd nanoparticles are distributed at the edges of the zeolite crystals. They vary in sizes from about 5-25 nm in diameter, which indicate a relative broad size distribution similar to that observed for Au/S1 in figure 2a. Some particles must have been subject of sintering, especially at the edges where the largest Pd nanoparticles are present. It is clear that these zeolite crystals contain the impregnated Pd nanoparticles, but the microporous structure limits the diffusion of the Pd precursor and the formation of Pd nanoparticles within the zeolite crystal.

In figure 10b it can be seen that the prepared recrystallized S1 crystals are similar In length and shape to the nonrecrystallized, but the TEM images reveal some bright areas indicating a broad distribution of intracrystalline voids and mesopores. It also appears like the external morphology is unchanged. Pd nanoparticles appear to be located within the zeolite crystals in the mesopores and less sintering seems to have happened. The size distribution of Pd nanoparticle is more narrow with sizes about 2-10 nm in diameter. Thus, a similar trend in regards to size distribution is observed for Pd zeolites as for the Au zeolites.

Large Pd nanoparticles of sizes about 25 nm due to sintering seem to have been avoided by the implementation of mesopores through the recrystallization according to the invention.

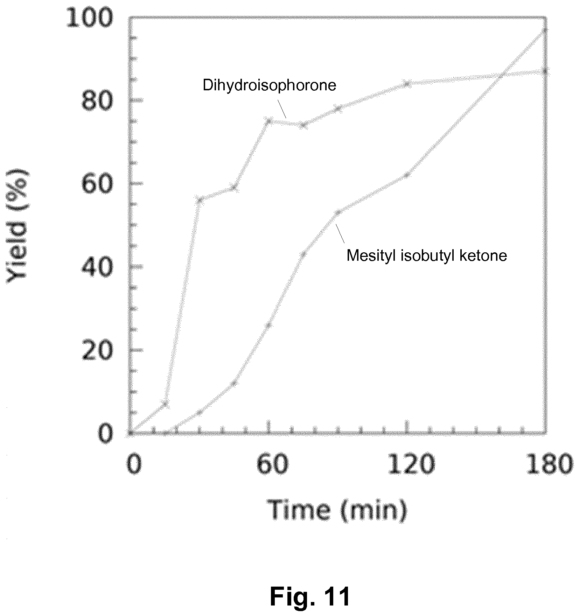

Figure 11 show the yield from the hydrogenation of mesityl oxide and isophorone performed at room temperature and under 1 bar of H₂ using Pd/Recryst-S1 as hydrogenation catalyst. These preliminary results indicate that zeolite encapsulated metal nanoparticle may be promising bifunctional catalyst for acid catalysed aldol condensations and subsequent hydrogenations into valuable products, such as the direct conversion of acetone into mesityl isobutyl ketone or dihydroisophorone.

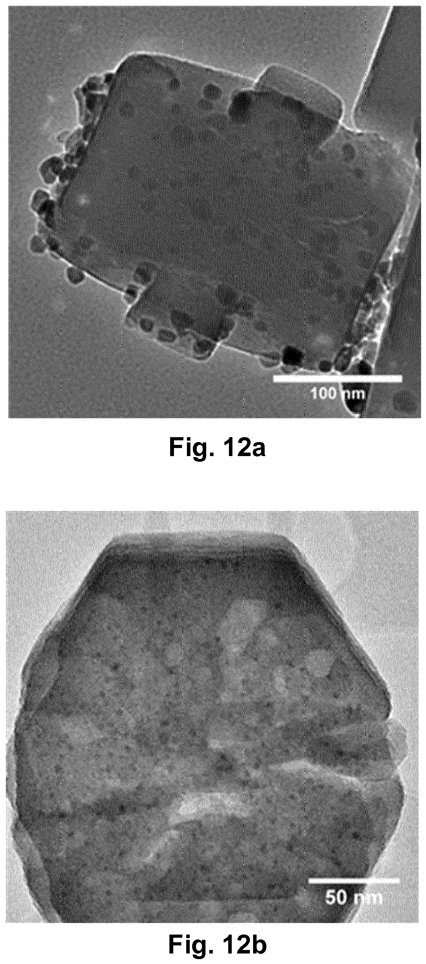

Figures 12a-b show the TEM images of two different silicalite-1 (S1) base zeolites; a traditionally synthesised nickel (Ni) impregnated zeolite of the type 1wt% Ni/S1 is shown in figure 12a, and a nickel impregnated recrystallized zeolite (Ni/Recryst-S1) according the invention is shown in figure 12b. Again it is clearly seen in figure 12a, that the metal particles are distributed evenly inside the zeolite structure in the recrystallized version according to the invention, whereas the metal particles form large particles mainly on the outside of the zeolite in the non-recrystallized version seen in figure 12a.

Further disclosed is the use of a zeolite, zeolite-like or zeotype structure with selective formation of metal, metal oxide or metal sulphide nanoparticles and/or clusters inside the zeolite, zeolite-like or zeotype structure according to the invention as catalytic material for chemical reactions.

Further disclosed is the use of a zeolite, zeolite-like or zeotype structure with selective formation of metal, metal oxide or metal sulphide nanoparticles and/or clusters inside the zeolite, zeolite-like or zeotype structure as defined above for the synthesis of liquid hydrocarbons from synthesis gas by means of the Fisher-Tropsch process or Mobile process.

Additionally disclosed is the use of a zeolite, zeolite-like or zeotype structure with selective formation of metal, metal oxide or metal sulphide nanoparticles and/or clusters inside the zeolite, zeolite-like or zeotype structure as defined above for *in-situ* generation of hydrogen peroxide (H₂O₂) from hydrogen (H2) and oxygen (O₂) for epoxidation of propylene.

Further disclosed is the use of a zeolite, zeolite-like or zeotype structure with selective formation of metal, metal oxide or metal sulphide nanoparticles and/or clusters inside the zeolite, zeolite-like or zeotype structure as defined above for catalytic exhaust and/or flue-gas cleaning.

Further disclosed is the use of a zeolite, zeolite-like or zeotype structure with selective formation of metal, metal oxide or metal sulphide nanoparticles and/or clusters inside the zeolite, zeolite-like or zeotype structure as defined above for synthesis of olefins in methanol to olefins reactions (MTO).

Further disclosed is the use of a zeolite, zeolite-like or zeotype structure with selective formation of metal, metal oxide or metal sulphide nanoparticles and/or clusters inside the zeolite, zeolite-like or zeotype structure as defined above for synthesis of methanol to hydrocarbons reactions (MTH).

Further disclosed is the use of a zeolite, zeolite-like or zeotype structure with selective formation of metal, metal oxide or metal sulphide nanoparticles and/or clusters inside the zeolite, zeolite-like or zeotype structure as defined above for the synthesis of methanol to gasoline reactions (MTG).

Further disclosed is the use of a zeolite, zeolite-like or zeotype structure with selective formation of metal, metal oxide or metal sulphide nanoparticles and/or clusters inside the zeolite, zeolite-like or zeotype structure as defined above for conversion of ammonia to N₂O, NOₓ and N₂.

Additional use applications of the zeolite, zeolite-like or zeotype structure with selective formation of metal, metal oxide or metal sulphide nanoparticles and/or clusters inside the zeolite, zeolite-like or zeotype structure may include fluid catalytic cracking, hydrocracking, hydroconversion, paraffin isomerisation, paraffin aromatisation, olefin oligomerisation, aromatic alkylation, aromatic disproportionation, aromatic isomerisation, hydration, hydrogenation, benzene hydroxylation, phenol hydroxylation, DeNOx stationary sources, and synthesis of fine chemicals.

The zeolite, zeolite-like or zeotype structure with selective formation of metal, metal oxide or metal sulphide nanoparticles and/or clusters inside the zeolite, zeolite-like or zeotype structure may also be used in shape-selective catalysis. The different shape-selective catalysis options described in the introduction part are for example reactant shape selectivity, product shape selectivity, and restricted transition-state shape selectivity.

### Experimental details

### Materials

Commercial carbon black particles (Black Pearls 2000, Carbot Corporation) with an average particle diameter of around 12 nm were used as carbon-template for the synthesis of mesoporous silicalite-1. The carbon black particles were dried at 110°C for 24 h prior to use. All other reagents were of reagent grade and used without further purification or pretreatment: HAuCl₄ (Sigma-Aldrich), tetraethylorthosilicate (TEOS, Sigma-Aldrich), tetrapropylammonium hydroxide (TPAOH, 1M aqueous solution, Sigma-Aldrich), (3-aminopropyl)trimethoxysilane (APS, Sigma-Aldrich), toluene (Sigma-Aldrich), cetyl trimethylammonium bromide (CTAB, Sigma-Aldrich), ethanol (absolute, Sigma-Aldrich), deionized water and Formier gas (10% H₂ in N₂, Air Liquide).

### Synthesis

The zeolites discussed in this application may be prepared by the following methods:

### Silicalite-1 (S1)

TEOS (4.465 ml) was added dropwise to TPAOH (7.265 ml) under stirring in a Teflon beaker. The mixture was stirred for 1 hour and then transferred to a Teflon-lined stainless steel autoclave (130 ml). The autoclave was heated to 180°C for 24 h under autogeneous pressure. The product was thoroughly washed with water, collected by filtration and washed again several times (until neutral pH). The product was dried at room temperature overnight and then calcined for 20 hours at 550°C (heating 5°C/min) to give a fine white powder.

### Au/S1

Silicalite-1 (0.9900 g) was impregnated with an aqueous solution of HAuCl₄·3H₂O (0.0199 g) to incipient wetness. The material was dried at room temperature overnight at then reduced in Formier gas for 2h at 350°C (heating 5°C/min) to give the final gold nanoparticle catalyst.

### Au/Meso-S1

Pre-dried carbon black (2 g) was put in a Teflon beaker, impregnated with TPAOH (7.265 ml) and dried at room temperature overnight. The material was then impregnated with TEOS (4.465 ml) and dried at room temperature overnight once more. The Teflon beaker was placed inside a Teflon-lined stainless steel autoclave (130 ml) containing enough water to produce saturated steal (15 ml) and heated to 180°C for 72 hours. The product was thoroughly washed with water, collected by filtration and washed again several times (until neutral pH). The product was dried at room temperature overnight and then calcined for 20 hours at 550°C (heating 5°C/min) to give a fine white powder. The mesoporous zeolite was impregnated and reduced according to the general synthetic procedure described for the synthesis of Au/S1.

### Au/APS-S1

Silicalite-1 (1 g) and toluene (100 ml) was added to a round-bottem flask equiped with a Liebig condenser. APS (1 ml) was added dropwise under stirring and the mixture was heated to 111°C and refluxed for 4 hours. After cooling to room temperature, the product was precipitated by addition of ethanol and collected by filtration. The surface functioinalized zeolite was dried overnight and then impregnated and reduced according to the general synthetic procedure described for the synthesis of Au/S1.

### Au/Recryst-S1

CTAB (0.7 g) was dissolved in an aqueous ammonia solution (100 ml, 2.5 wt%). Silicalite-1 (1g) was added and the suspension was stirred for 3 hours at room temperature. The mixture was then transferred to a Teflon-lined stainless steel autoclave and heated to 140°C for 24 hours. The product was collected by filtration, dried overnight and calcined at 550°C for 5 hours to remove the surfactant. The obtained material was then impregnated and reduced according to the general synthetic procedure described for the synthesis of Au/S1.

### Pd/Recryst-S1

The recryst-S1 zeolite was impregnated with the palladium precursor by incipient wetness impregnation. For this 0.99 g of the recrystallized zeolite S1 was first pre-dried under vacuum at 50 °C. A solution of 0.0250 g (0.094 mmol) palladium(II)nitrate dihydrate (aq) in 0.30 mL of H₂O was added to the recrystallized S1. It was dried at 25 °C and then reduced with 10% hydrogen/90% nitrogen by gradual heating at a rate of 5 °C/min to the set temperature of 350 °C for 120 min to give the final palladium nanoparticle catalyst.

### Ni/Recryst-S1

The recryst-S1 zeolite was impregnated with the nickel precursor by incipient wetness impregnation. For this 0.99 g of the recrystallized zeolite S1 was first pre-dried under vacuum at 50 °C. A solution of 0.0495 g (0.170 mol) nickel(II)nitrate hexahydrate (aq) in 0.30 mL of H₂O was added to the recrystallized S1. It was dried at 25 °C and then reduced with 10% hydrogen/90% nitrogen by gradual heating at a rate of 5 °C/min to the set temperature of 350 °C for 120 min to give the final nickel nanoparticle catalyst.

### Methods for characterisation - Transmission Electron Microscopy (TEM)

TEM was performed on a FEI Tecnai microscope operated at 200kV with the samples dispersed directly on holey carbon grids. The mean diameter and standard deviation of the nanoparticles was calculated by measurements of -250 particles.

### Methods for characterisation - Physisorption Analysis

Argon gas physisorption analysis was performed at 77 K on a Micromeritics ASAP 2020. The samples were outgassed in vacuum at 300°C, 16 h prior to measurement. The (apparent) total surface areas were calculated according to the BET method. Pore size distributions were calculated by the BJH method. External surface area, micropore area and micropore volume were determined by t-plot methods using the desorption branch of the isotherm.

## Claims

1. A method for producing a zeolite, zeolite-like or zeotype structure with selective formation of metal, metal oxide or metal sulphide nanoparticles and/or clusters inside the zeolite, zeolite-like or zeotype structure, the method comprising the steps of:
a) treating a zeolite, zeolite-like or zeotype structure with an alkaline solution in the presence of a surfactant thereby obtaining a zeolite, zeolite-like or zeotype structure having a partly dissolved structure;
b) heating the partly dissolved zeolite, zeolite-like or zeotype structure to an elevated temperature between 110-200 °C, thereby obtaining a zeolite, zeolite-like or zeotype structure with an additional porosity situated inside the structure;
c) impregnating the zeolite, zeolite-like or zeotype structure with the additional porosity situated inside the structure with a solution comprising at least one transition metal precursor selected from nitrates, carbonates, acetates, sulphates, chlorides, carbonyls or formates thereby obtaining a transition metal precursor containing zeolite, zeolite-like or zeotype structure; and
d) obtaining the zeolite, zeolite-like or zeotype structure with selective formation of metal, metal oxide or metal sulphide nanoparticles and/or clusters inside the zeolite, zeolite-like or zeotype structure by:
i. subjecting the transition metal precursor containing zeolite, zeolite-like or zeotype structure to a reactive atmosphere selected from a stream of hydrogen gas (H₂), a stream of oxygen gas (O₂), a stream of hydrogen sulfide gas (H₂S), a stream of methane gas (CH₄), or a stream of ammonia gas (NH₃) at an elevated temperature, or
ii. decomposing the transition metal precursor containing zeolite, zeolite-like or zeotype structure by thermal treatment,
wherein the transition metal, metal oxide or metal sulphide nanoparticle particles are selectively positioned inside the zeolite, zeolite-like or zeotype structure.

2. A method according to claim 1, wherein the alkaline solution in step a) is selected from bicarbonates, carbonates, ammonia hydroxide, sodium hydroxide, and potassium hydroxide.

3. A method according to any preceding claim, wherein the surfactant in step a) is selected from anionic, cationic, zwitterionic and nonionic surfactant, including C8-C18 alkyltrimethylammonium bromides, phencyclidine hydrochloride (P123), polyoxyethylene 20 cetyl ether (Brij-58), and polyoxypropylene-polyoxyethylene block polymer polyglycol (F127).

4. A method according to any preceding claim, wherein heating the partly dissolved zeolite, zeolite-like or zeotype structure to an elevated temperature in step b) is done in an autoclave.

5. A method according to any preceding claim, wherein the elevated temperature in step b) is between 110-190 °C, or between 110-180 °C, or between 120-170 °C, or between 120-160 °C, or between 130-150 °C, or between 135-145 °C.

6. A method according to any preceding claim, wherein the zeolite, zeolite-like or zeotype structure with an additional porosity situated inside the structure obtained in step b) is dried prior to the impregnation in step c).

7. A method according to any preceding claim, wherein the transition metal precursor in step c) comprises one or more metal(s) selected from the group consisting of group 4 elements, group 6 elements, group 7 elements, group 8 elements, group 9 elements, group 10 elements, group 11 elements or group 12 elements or mixtures thereof.

8. A method according to any preceding claim, wherein the transition metal precursor in step c) comprises:
- one or more metal(s) selected from the group of manganese, rhenium, iron, ruthenium, osmium, cobalt, rhodium, iridium, nickel, palladium, platinum, copper, silver, gold, cadmium, molybdenum, zinc, vanadium, chrome, titanium or mixtures thereof; or
- one or more metal alloys(s) selected from the group of molybdenum-cobalt, molybdenum-nickel, molybdenum-platinum, iron-ruthenium, iron-cobalt, iron-nickel, ruthenium-cobalt, ruthenium-copper, ruthenium-platinum, cobalt-palladium, cobalt-platinum, cobalt-gold, nickel-platinum, iridium-platinum, palladium-platinum, palladium-copper, palladium-gold, platinum-gold, or silver-gold.

9. A method according to any preceding claim, wherein the thermal treatment in step d)ii is performed in the temperature range from 200 to 800 °C, from 200 to 600 °C or from 200 to 500 °C.

10. A method according to any preceding claim, wherein the zeolite, zeolite-like or zeotype structure has a framework type selected from BEA, FAU, MFI, MEL MOR, CHA or MTW.

## Patentansprüche

1. Verfahren zur Herstellung einer Zeolith-, zeolithartigen oder Zeotyp-Struktur mit selektiver Bildung von Metall-, Metalloxid- oder Metallsulfid-Nanopartikeln und/oder Clustern im Inneren der Zeolith-, zeolithartigen oder Zeotyp-Struktur, wobei das Verfahren die folgenden Schritte umfasst:
a) Behandeln einer Zeolith-, zeolithartigen oder Zeotyp-Struktur mit einer alkalischen Lösung in Gegenwart eines Tensids, wodurch eine Zeolith-, zeolithartige oder Zeotyp-Struktur mit einer teilweise aufgelösten Struktur erhalten wird;
b) Erhitzen der teilweise aufgelösten Zeolith-, zeolithartigen oder Zeotyp-Struktur auf eine erhöhte Temperatur zwischen 110-200 °C, wodurch eine Zeolith-, zeolithartige oder Zeotyp-Struktur mit einer innerhalb der Struktur befindlichen zusätzlichen Porosität erhalten wird;
c) Imprägnieren der Zeolith-, zeolithartigen oder Zeotyp-Struktur mit der innerhalb der Struktur befindlichen zusätzlichen Porosität mit einer Lösung umfassend mindestens einen Übergangsmetallvorläufer ausgewählt aus Nitraten, Carbonaten, Azetaten, Sulfaten, Chloriden, Carbonylen oder Formaten, wodurch ein Übergangsmetallvorläufer erhalten wird, der Zeolith-, zeolithartige oder Zeotyp-Struktur enthält; und
d) Erhalten der Zeolith-, zeolithartigen oder Zeotyp-Struktur mit selektiver Bildung von Metall-, Metalloxid- oder Metallsulfid-Nanopartikeln und/ oder Clustern im Inneren der Zeolith-, zeolithartigen oder Zeotyp-Struktur durch:
i. Unterwerfen des Übergangsmetallvorläufers, der Zeolith-, zeolithartige oder Zeotyp-Struktur enthält, einer reaktiven Atmosphäre ausgewählt aus einem Strom von Wasserstoffgas (H₂), einem Strom von Sauerstoffgas (O₂), einem Strom von Wasserstoffsulfidgas (H₂S), einem Strom von Methangas (CH₄) oder einem Strom von Ammoniakgas (NH3) bei einer erhöhten Temperatur, oder
ii. Abbauen des Übergangsmetallvorläufers, der Zeolith-, zeolithartige oder Zeotyp-Struktur enthält, durch thermische Behandlung,
wobei die Übergangsmetall-, Metalloxid- oder Metallsulfid-Nanopartikel selektiv innerhalb der Zeolith-, zeolithartigen oder Zeotyp-Struktur positioniert werden.

2. Verfahren nach Anspruch 1, wobei die alkalische Lösung im Schritt a) aus Bicarbonaten, Carbonaten, Ammoniakhydroxid, Natriumhydroxid und Kaliumhydroxid ausgewählt ist.

3. Verfahren nach einem der vorgehenden Ansprüche, wobei das Tensid des Schrittes a) aus anioischem, kationischem, zwitterionischem und nichtionischem Tensid, umfassend C8-C18-Alkyltrimethylammoniakbromide, Phencyclidinhydrochlorid (P123), Polyoxyethylen-20-Cetylether (Brij-58) und Polyoxypropylen-Polyoxyethylen-Blockpolymer-Polyglycol (F127) ausgewählt ist.

4. Verfahren nach einem der vorgehenden Ansprüche, wobei das Erhitzen der teilweise aufgelösten Zeolith-, zeolithartigen oder Zeotyp-Struktur auf eine erhöhte Temperatur im Schritt b) in einem Autoklav durchgeführt wird.

5. Verfahren nach einem der vorgehenden Ansprüche, wobei die erhöhte Temperatur im Schritt b) zwischen 110-190 °C, oder zwischen 110-180 °C, oder zwischen 120-170 °C, oder zwischen 120-160 °C, oder zwischen 130-150 °C, oder zwischen 135-145 °C liegt.

6. Verfahren nach einem der vorgehenden Ansprüche, wobei die im Schritt b) erhaltene Zeolith-, zeolithartige oder Zeotyp-Struktur mit einer innerhalb der Struktur befindlichen zusätzlichen Porosität vor dem Imprägnieren im Schritt c) getrocknet wird.

7. Verfahren nach einem der vorgehenden Ansprüche, wobei der Übergangsmetallvorläufer im Schritt c) ein oder mehrere Metall(e) ausgewählt aus Elementen der Gruppe 4, Elementen der Gruppe 6, Elementen der Gruppe 7, Elementen der Gruppe 8, Elementen der Gruppe 9, Elementen der Gruppe 10, Elementen der Gruppe 11 oder Elementen der Gruppe 12 oder Mischungen davon umfasst bzw. umfassen.

8. Verfahren nach einem der vorgehenden Ansprüche, wobei der Übergangsmetallvorläufer im Schritt c) Folgendes umfasst:
- ein oder mehrere Metall(e) ausgewählt aus der Gruppe von Mangan, Rhenium, Eisen, Ruthenium, Osmium, Kobalt, Rhodium, Iridium, Nickel, Palladium, Platin, Kupfer, Silber, Gold, Cadmium, Molybdän, Zink, Vanadium, Chrom, Titan oder Mischungen davon; oder
- eine oder mehrere Metalllegierung(en) ausgewählt aus der Gruppe von Molybdän-Kobalt, Molybdän-Nickel, Molybdän-Platin, Eisen-Ruthenium, Eisen-Kobalt, Eisen-Nickel, Ruthenium-Kobalt, Ruthenium-Kupfer, Ruthenium-Platin, Kobalt-Palladium, Kobalt-Platin, Kobalt-Gold, Nickel-Platin, Iridium-Platin, Palladium-Platin, Palladium-Kupfer, Palladium-Gold, Platin-Gold oder Silber-Gold.

9. Verfahren nach einem der vorgehenden Ansprüche, wobei die thermische Behandlung im Schritt d)ii im Temperaturbereich von 200 bis 800 °C, von 200 bis 600 °C oder von 200 bis 500 °C durchgeführt wird.

10. Verfahren nach einem der vorgehenden Ansprüche, wobei die Zeolith-, zeolithartige oder Zeotyp-Struktur einen Framework-Typ ausgewählt aus BEA, FAU, MFI, MEL MOR, CHA oder MTW aufweist.

## Revendications

1. Procédé de production d'une structure de zéolite, de type zéolite ou de zéotype avec une formation sélective de nanoparticules et / ou de regroupements de métal, d'oxyde métallique ou de sulfure métallique à l'intérieur de la structure de zéolite, de type zéolite ou de zéotype, le procédé comprenant les étapes consistant à :
a) traiter une structure de zéolite, de type zéolite ou de zéotype avec une solution alcaline en présence d'un tensioactif, obtenant ainsi une structure de zéolite, de type zéolite ou de zéotype ayant une structure partiellement dissoute ;
b) chauffer la structure de zéolite, de type zéolite ou de zéotype partiellement dissoute à une température élevée entre 110-200 °C, obtenant ainsi une structure de zéolite, de type zéolite ou de zéotype avec une porosité supplémentaire située à l'intérieur de la structure ;
c) imprégner la structure de zéolite, de type zéolite ou de zéotype avec la porosité supplémentaire située à l'intérieur de la structure avec une solution comprenant au moins un précurseur de métal de transition choisi parmi les nitrates, les carbonates, les acétates, les sulfates, les chlorures, les carbonyles ou les formiates, obtenant ainsi un précurseur de métal de transition contenant une structure de zéolite, de type zéolite ou de zéotype ; et
d) obtenir la structure de zéolite, de type zéolite ou de zéotype avec une formation sélective de nanoparticules et / ou de regroupements de métal, d'oxyde métallique ou de sulfure métallique à l'intérieur de la structure de zéolite, de type zéolite ou de zéotype en :
i. soumettant le précurseur de métal de transition contenant une structure de zéolite, de zéolithe ou de zéotype à une atmosphère réactive choisie parmi un courant d'hydrogène gazeux (H2), un courant d'oxygène gazeux (O₂), un courant d'hydrogène sulfuré gazeux (H2S), un courant de méthane gaz (CH4) ou un courant de gaz ammoniac (NH3) à une température élevée, ou
ii. décomposer le précurseur de métal de transition contenant une structure de zéolite, de type zéolite ou de zéotype par un traitement thermique, dans lequel les particules de nanoparticules de métal de transition, d'oxyde métallique ou de sulfure métallique sont positionnées sélectivement à l'intérieur de la structure de zéolite, de type zéolite ou de zéotype.

2. Procédé selon la revendication 1, dans lequel la solution alcaline de l'étape a) est choisie parmi les bicarbonates, les carbonates, l'hydroxyde d'ammoniac, l'hydroxyde de sodium et l'hydroxyde de potassium.

3. Procédé selon l'une quelconque des revendications précédentes, dans lequel le tensioactif de l'étape a) est choisi parmi les tensioactifs anioniques, cationiques, zwitterioniques et non ioniques, y compris les bromures d'alkyltriméthylammonium en C8-C18, le chlorhydrate de phencyclidine (P123), le polyoxyéthylène 20 cétyléther (Brij-58), et polyglycole de polymère séquencé de polyoxypropylène-polyoxyéthylène (F127).

4. Procédé selon l'une quelconque des revendications précédentes, dans lequel le chauffage de la structure de zéolite, du type zéolite ou du zéotype partiellement dissoute à une température élevée à l'étape b) est effectué dans un autoclave.

5. Procédé selon l'une quelconque des revendications précédentes, dans lequel la température élevée à l'étape b) est entre 110-190 °C, ou entre 110-180 °C, ou entre 120-170 °C, ou entre 120-160 °C, ou entre 130-150 °C, ou entre 135-145 °C.

6. Procédé selon l'une quelconque des revendications précédentes, dans lequel la structure de zéolite, de type zéolite ou de zéotype avec une porosité supplémentaire située à l'intérieur de la structure obtenue à l'étape b) est séchée avant l'imprégnation à l'étape c).

7. Procédé selon l'une quelconque des revendications précédentes, dans lequel le précurseur de métal de transition à l'étape c) comprend un ou plusieurs métaux choisis dans le groupe constitué des éléments du groupe 4, des éléments du groupe 6, des éléments du groupe 7, des éléments du groupe 8, des éléments du groupe 9, des éléments du groupe 10, des éléments du groupe 11 ou des éléments du groupe 12 ou leurs mélanges.

8. Procédé selon l'une quelconque des revendications précédentes, dans lequel le précurseur de métal de transition à l'étape c) comprend :
- un ou plusieurs métaux choisis dans le groupe consistant en manganèse, rhénium, fer, ruthénium, osmium, cobalt, rhodium, iridium, nickel, palladium, platine, cuivre, argent, or, cadmium, molybdène, zinc, vanadium, chrome, titane ou leurs mélanges ; ou
- un ou plusieurs alliages métalliques choisis dans le groupe composé par molybdène-cobalt, molybdène-nickel, molybdène-platine, fer-ruthénium, fer-cobalt, fer-nickel, ruthénium-cobalt, ruthénium-cuivre, ruthénium-platine, cobalt-palladium, cobalt-platine, cobalt-or, nickel-platine, iridium-platine, palladium-platine, palladium-cuivre, palladium-or, platine-or ou argent-or.

9. Procédé selon l'une quelconque des revendications précédentes, dans lequel le traitement thermique à l'étape d)ii est effectué dans la plage de températures de 200 à 800 °C, de 200 à 600 °C ou de 200 à 500 °C.

10. Procédé selon l'une quelconque des revendications précédentes, dans lequel la structure de zéolite, de type zéolite ou de zéotype a un type d'ossature choisi parmi BEA, FAU, MFI, MEL MOR, CHA ou MTW.
